# EUROPÄISCHE PATENTSCHRIFT

(11) **EP 1 100 670 B1**
(45) Veröffentlichungstag und Bekanntmachung des Hinweises auf die Patenterteilung: **23.04.2003**
(21) Anmeldenummer: 99938294.8
(22) Anmeldetag: 20.07.1999
(51) Int. Cl.: B29C 45/67, F15B 21/14, F15B 11/02

(54) **HYDROSTATISCHES ANTRIEBSSYSTEM FÜR EINE SPRITZGIESSMASCHINE**
HYDROSTATIC DRIVE SYSTEM FOR AN INJECTION MOLDING MACHINE
SYSTEME D'ENTRAINEMENT HYDROSTATIQUE POUR PRESSE D'INJECTION

(30) Priorität: 01.08.1998 DE 19834826; 17.09.1998 DE 19842534
(43) Veröffentlichungstag der Anmeldung: 23.05.2001
(73) Patentinhaber: Bosch Rexroth AG, 97816 Lohr am Main (DE)
(72) Erfinder: DANTLGRABER, Jörg, D-97816 Lohr (DE)
(86) Internationale Anmeldenummer: EP9905154
(87) Internationale Veröffentlichungsnummer: WO00007796

(56) Entgegenhaltungen:
- FR-A- 2 317 982
- PATENT ABSTRACTS OF JAPAN vol. 6, no. 124 (M-141), 9. Juli 1982 (1982-07-09) & JP 57 051438 A (MEIKI SEISAKUSHO K.K.), 26. März 1982 (1982-03-26)

## Beschreibung

Die Erfindung geht aus von einem hydrostatischen Antriebssystem für eine Spritzgießmaschine, deren Schließeinheit eine bewegliche Formschließplatte aufweist, die von einem Differentialhydrozylinder verfahrbar ist.

Es sind verschiedenartige Antriebssysteme für die bewegliche Formschließplatte der Schließeinheit einer Spritzgießmaschine bekannt.

Viele Druckschriften zeigen Spritzgießmaschinen, bei denen das Antriebssystem für die bewegliche Formschließplatte einen Rotationsmotor umfaßt. So zeigt etwa die EP 0 167 631 B1 eine Spritzgießmaschine mit einem elektischen Servomotor, der über ein Ritzel eine Kugelumlaufbüchse drehend antreibt, durch die hindurch sich eine Spindel erstreckt, die fest mit der Formschließplatte verbunden ist. Wenn der Elektromotor die in Bewegungsrichtung der Formschließplatte ortsfeste Kugelumlaufbüchse antreibt, wandert die Spindel und mit ihr die Formschließplatte in axialer Richtung. Bei einer aus der EP 0 427 438 A1 bekannten Spritzgießmaschine treibt ein Elektromotor über mehrere Zahnrädergetriebestufen ein mit einer Zahnstange kämmendes Ritzel an. Die Zahnstange ist fest mit der beweglichen Formschließplatte verbunden und bewegt diese je nach Drehrichtung des Elektromotors in Schließ- oder Öffnungsrichtung des Werkzeugs.

Ein einen rotierenden Hydromotor aufweisendes Antriebssystem für eine Spritzgießmaschine ist aus der DE 37 18 106 A1 bekannt. Dort wird eine in Axialrichtung ortsfest angeordnete Kugelspindel über ein erstes Zahnrad, das fest auf der Kugelspindel sitzt, einen Zahnriemen und ein zweites Zahnrad, das auf der Abtriebswelle eines Hydromotors befestigt ist, rotierend angetrieben. Diese rotierende Bewegung wird über eine Kugelumlaufbüchse in eine lineare Bewegung der beweglichen Formschließplatte umgesetzt. Ein Hydromotor baut gegenüber einem Elektromotor bei gleichem Leistungsvermögen viel kleiner, so daß ein kompakter Maschinenaufbau möglich ist.

Die EP 0 135 652 A1 zeigt ein hydrostatisches Antriebsystem für eine Spritzgießmaschine, bei der die bewegliche Förmschließplatte von einem Differentialhydrozylinder, also von einem hydraulischen Linearmotor verfahren wird. Die Druckräume des Hydrozylinders sind an zwei Verbraucheranschlüsse eines 4/3 Wegeventils angeschlossen, die in einer Mittelstellung des Wegeventils abgesperrt sind und in einer seitlichen Arbeitsstellung des Wegeventils je nach Verfahrrichtung der Formschließplatte mit einer Hydropumpe oder mit einem Tank verbunden werden. Durch das Wegeventil hindurchfließendes Druckmittel ist dort einer Drosselung unterworfen, die die bei der Steuerung eines Hydrozylinders über ein Wegeventil prinzipbedingten Verluste an nicht nutzbarer Energie mit sich bringt. Ziel der Erfindung ist es, für die bewegliche Formschließplatte einer Spritzgießmaschine ein hydrostatisches Antriebssystem zu schaffen, bei dem nur geringe Verluste an nicht nutzbarer Energie auftreten.

Dieses Ziel wird gemäß der Erfindung dadurch erreicht, daß von der Hydropumpe Druckmittel in ein einen Hydrospeicher aufweisendes Drucknetz förderbar ist, daß der erste Druckraum des Hydrozylinders an das Drucknetz angeschlossen ist und daß die Steuerung des Hydrozylinders über einen Hydrotransformator erfolgt, der mit seinem primärseitigen Druckanschluß am Drucknetz liegt und über dessen sekundärseitigen Druckanschluß Druckmittel dem zweiten Druckraum des Hydrozylinders zuführbar oder aus dem zweiten Druckraum abführbar ist.

Gegenüber bekannten hydrostatischen Antriebssystemen mit Volumenstromkopplung zwischen der Hydropumpe und dem Hydrozylinder ist also das Regelventil durch die direkte Verbindung des kolbenstangenseitigen Druckraums mit dem Drucknetz und durch den Hydrotransformator ersetzt. Es wird somit ohne Drosselung des Druckmittelstroms und ohne die dadurch entstehenden Energieverluste gearbeitet.Es fallen in erster Linie nur die durch den Wirkungsgrad des Hydrotransformators bedingten Verluste an.

Bei einem erfindungsgemäßen hydrostatischen Antriebssystem kann außerdem aus zweierlei Gründen die installierte Leistung zum Antrieb der Hydropumpe wesentlich geringer als bei einem hydrostatischen Antrieb mit Volumenstromkoppelung gehalten werden. Zum einen ist es möglich, auch in den Zeiten, in denen die bewegliche Formschließplatte stillsteht, also bei geschlossener und ganz geöffneter Form, die Hydropumpe durch den Antriebsmotor anzutreiben und in den genannten Totzeiten den Hydrospeicher aufzufüllen, so daß für die anfängliche Beschleunigung der Formschließplatte während des Schließvorgangs und für die Bewegung der Formschließplatte während des Öffnens trotz kleiner Leistung des Antriebsmotors viel Druckmittel unter hohem Druck zur Verfügung steht. Zum andern wird während des Abbremsens der Formschließplatte deren Bewegungsenergie dazu ausgenutzt, um Druckmittel in den Hydrospeicher einzuspeisen. Somit wird ein Teil der in die Beschleunigung der Formschließplatte hineingesteckten Energie während der Abbremsung wieder zurückgewonnen. Durch die Hydropumpe und den sie antreibenden Antriebsmotor müssen jeweils nur die Verluste an nicht wieder nutzbarer Energie ausgeglichen werden.

Die Zeit, in der die Form geschlossen ist, kann verschieden von derjenigen sein, in der die Form offen ist. Man wird den Antriebsmotor und die Hydropumpe jeweils so auslegen, daß in der jeweils kürzeren Totzeit der Hydrospeicher auf den für die folgende Bewegung der Werkzeugaufspannplatte notwendigen Druck aufgeladen wird.

Vorteilhafte Ausgestaltungen eines erfindungsgemäßen hydrostatischen Antriebssystem für eine Spritzgießmaschine kann man den Unteransprüchen entnehmen.

In der längeren Totzeit kann die Hydropumpe zeitweise stillgesetzt oder auf Umlauf des Druckmittels zum Tank geschaltet werden. In diesem Fall ist gemäß Anspruch 5 zwischen dem Hydrospeicher und der Hydropumpe ein Ventil angeordnet, durch das ein Druckmittelfluß vom Hydrospeicher zur Hydropumpe bzw. zum Tank verhindert wird. Das Ventil ist gemäß Anspruch 6 vorzugsweise ein von der Sekundäreinheit zur Hydropumpe hin sperrendes Rückschlagventil.

Vorzugsweise wird gemäß Anspruch 7 zum Antrieb der Hydropumpe ein Elektromotor verwendet, dessen Drehzahl über ein Steuergerät veränderbar ist. Die Hydropumpe ist vorzugsweise eine Konstantpumpe. Es ist denkbar, den Elektromotor jeweils mit einer solchen Drehzahl anzutreiben, daß am Ende einer Totzeit ein Druck herrscht, der für den Bewegungszyklus der Formschließplatte als besonders günstig angesehen wird. Man kann jedoch auch den Elektromotor unabhängig von der Dauer der Totzeit, in der die Formschließplatte ruht und die auch von Formstück zu Formstück unterschiedlich sein kann, jeweils mit einer Drehzahl hohen Wirkungsgrades betreiben. Wird im Hydrospeicher schließlich ein Druck erreicht, der für den Bewegungszyklus der Formschließplatte als günstig angesehen wird und vorgegeben ist, so wird der Elektromotor ausgeschaltet.

Hydrostatische Antriebssysteme mit einem Hydrotransformator zwischen einem Drucknetz und einem Hydrozylinder sind an sich allgemein bekannt, so daß sich nähere Ausführungen zu ihrer Funktionsweise erübrigen. Darüberhinaus wird auf die DE 32 02 015 C2, die WO 97/31185 und das Buch "Hydrostatische Antriebe mit Sekundärregelung" verwiesen, das in der Reihe "Der Hydraulik Trainer" als Band 6, zweite Auflage, 1996 erschienen und von der Mannesmann Rexroth AG herausgegeben worden ist. Insbesondere auf den Seiten 143 bis 156 des Buches werden Zylindersteuerungen mit einem Hydrotransformator am Drucknetz beschrieben.

Drei Ausführungsbeispiele eines erfindungsgemäßen hydrostati-schen Antriebssystem für eine Spritzgießmaschine sind in den Zeichnungen dargestellt. Anhand dieser Zeichnungen wird die Erfindung nun näher erläutert.

Es zeigen
- Figur 1: das erste Ausführungsbeispiel, dessen Hydrotransformator aus zwei mechanisch miteinander gekoppelten Hydromaschinen besteht, von denen die am Drucknetz liegende verstellbar ist,
- Figur 2: das zweite Ausführungsbeispiel mit einem anders aufgebauten Hydrotransformator und
- Figur 3: das dritte Ausführungsbeispiel, dessen Hydropumpe Von einem drehzahlvariablen Elektromotor angetrieben wird.

In den Zeichnungen ist die Formschließplatte einer Kunststoffspritzgießmaschine mit 10 bezeichnet. DieseFormschließplatte ist in nicht näher dargestellter Weise am Gestell der Kunststoffspritzgießmaschine geradlinig geführt und von einem Hydrozylinder 11 in zwei entgegengesetzte Richtungen verfahrbar. Der Hydrozylinder 11 ist ein Differentialhydrozylinder und besitzt in einem Zylindergehäuse 12 einen Kolben 13, von dem einseitig eine Kolbenstange 14 abgeht, die an der einen Stirnseite aus dem Zylindergehäuse 12 austritt und an der die Formschließplatte 10 befestigt ist. Der Kolben 13 trennt im Inneren des Zylindergehäuses 12 einen kolbenstangenseitigen, ringförmigen, ersten Druckraum 15 von einem kolbenstangenabseitigen, vollzylinderförmigen, zweiten Druckraum 16.

Der Hydrozylinder 11 gehört jeweils zu einem hydrostatischen Antriebssystem, das ein sekundärgeregeltes Subsystem aufweist und wesentlich durch eine Druckleitung 17 mit einem aufgeprägten Druck und durch einen Hydrotransformator 18 gekennzeichnet ist. Druckmittelquelle ist eine Hydropumpe 19, die von einem Antriebsmotor 20 antreibbar ist und Druckmittel, das sie aus einem Tank 25 ansaugt, in die Druckleitung 17 abgeben kann. Die Hydropumpe 19 hat ein konstantes Hubvolumen, kann also bei jeder Umdrehung ihrer Antriebswelle dieselbe Menge Druckmittel in die Druckleitung 17 hineindrücken.

Die Abgabe des Druckmittels in die Druckleitung 17 hinein erfolgt über ein Rückschlagventil 26, das zur Hydropumpe 19 hin sperrt. Es kann unmittelbar am Gehäuse der Hydropumpe sitzen.

An die Druckleitung 17 ist ein Hydrospeicher 24 angeschlossen, durch den größere und schnelle Druckschwankungen in der Druckleitung 17 vermieden werden und der zur Speicherung von Druckmittel auf einem hohen Druckniveau dient. Natürlich können auch mehrere Hydrospeicher 24 vorhanden sein.

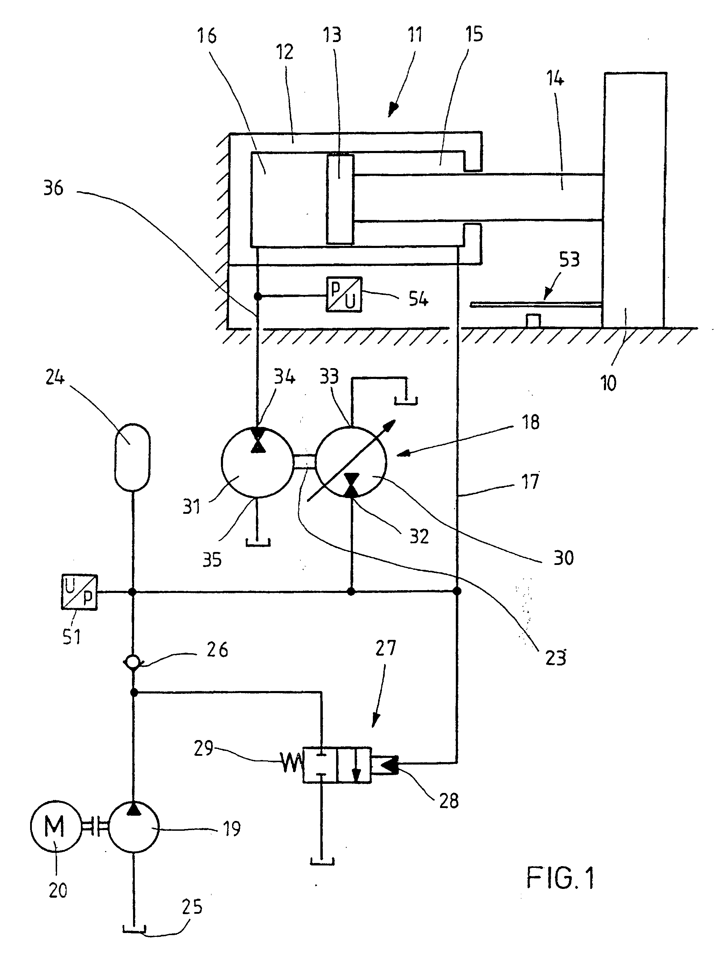

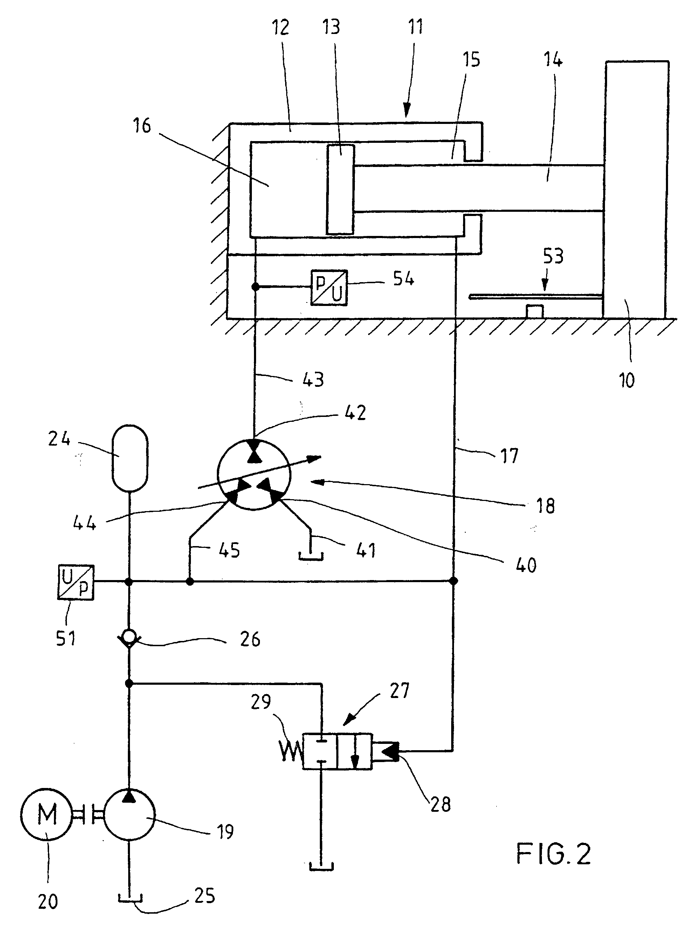

Bei den Ausführungen nach den Figuren 1 und 2 ist an den Förderausgang der Hydropumpe 19 stromauf des Rückschlagventils 26 der Eingang eines vereinfacht dargestellten Speicherladeventils 27 angeschlossen, das an einer Steuerfläche 28 vom in der Druckleitung 17 und im Hydrospeicher 24 herrschenden Druck beaufschlagt wird und dessen Ventilglied von einer Druckfeder 29 in Schließstellung vorgespannt ist. Der Ausgang des Speicherladeventils 27 ist mit dem Tank 25 verbunden. Das Speicherladeventil 27 ist geschlossen, solange die von dem Druck im Hydrospeicher 24 an der Steuerfläche 28 erzeugte Kraft kleiner als die Kraft der Druckfeder 29 ist. Die Hydropumpe 19 fördert dann Druckmittel in die Druckleitung 17 und in den Hydrospeicher 24. Wenn der Speicherdruck einen am Speicherladeventil eingestellten maximalen Wert erreicht, öffnet das Speicherladeventil, so daß die Hydropumpe 19 im Umlauf zum Tank fördert. Ist der Speicherdruck unter einen eingestellten minimalen Wert gesunken, schließt das Speicherladeventil wieder.

Der Hydrotransformator 18 der gezeigten erfindungsgemäßen hydrostatischen Antriebssysteme gehört insofern teilweise zu dem sekundärgeregelten Subsystem, als über ihn Druckmittel aus der Druckleitung 17 zum Tank 25 abfließen und aus dem Tank in die Druckleitung gefördert werden kann.

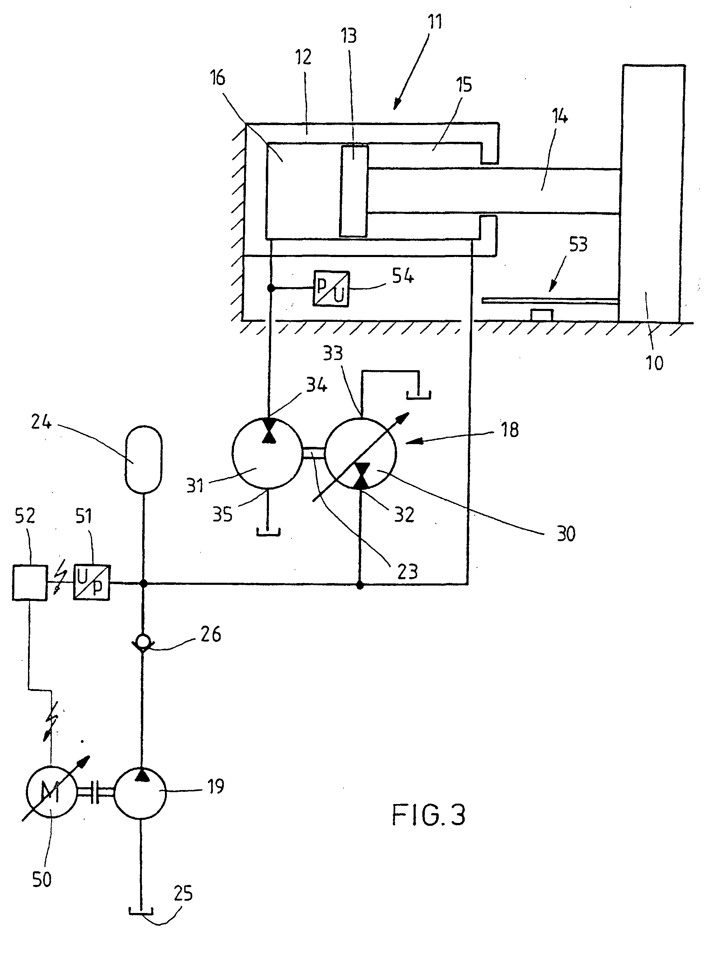

Bei den beiden Ausführungen nach den Figuren 1 und 3 besteht der Hydrotransformator aus zwei über eine Welle 23 mechanisch miteinander gekoppelten Hydromaschinen 30 und 31, z. B aus zwei Axialkolbenmaschinen, die beide als Hydropumpen und nach Drehrichtungsumkehr als Hydromotoren arbeiten können. Die Hydromaschine 30 ist die Sekundäreinheit des sekundärgeregelten Subsystems, mit einem Druckanschluß 32 mit der Druckleitung 17 und einem Tankanschluß 33 mit dem Tank 25 verbunden und in ihrem Hubvolumen zwischen null und einem maximalen Wert verstellbar. Die Hydromaschine 31 besitzt ein konstantes Hubvolumen. Ein Druckanschluß 34 von ihr ist über eine Leitung 36 mit dem zweiten Druckraum 16 des Hydrozylinders 11 und ein Tankanschluß 35 mit Tank 25 verbunden.

Es ist auch möglich, anstelle einer Hydromaschine mit konstantem Hubvolumen eine mit verstellbarem Hubvolumen zu verwenden. Die Verstellung der Hydromaschinen 30 und 31 muß dann gegensinnig erfolgen.

Der Hydrotransformator 18 der Ausführung nach Figur 2 ist, wie durch das andere Symbol angedeutet, anders als derjenige der Ausführungen nach den Figuren 1 und 3 aufgebaut. Er besitzt in einer gegenüber einer Schrägscheibe drehbaren Trommel eine Reihe von im gleichen Abstand zur Drehachse der Trommel angeordneten Axialkolben mit rückwärtigen Arbeitsräumen, die zu einer Steuerscheibe hin offen sind. Diese weist drei sich jeweils über das gleiche Bogenmaß erstreckende Steuerschlitze auf, von denen ein Steuerschlitz 40 über eine Leitung 41 mit Tank 25, ein Steuerschlitz 42 über eine Leitung 43 mit dem Druckraum 16 des Hydrozylinders 11 und ein Steuerschlitz 44 über eine Leitung 45 mit der Druckleitung 17 verbunden ist. Die Steuerscheibe ist gegenüber der Trommel mit den Axialkolben verdrehbar, so daß der Bereich an der Schrägscheibe, an dem sich während der fluidischen Verbindung des Arbeitsraums hinter einem Axialkolben mit einem der Steuerschlitze der Axialkolben abstützt, durch Verdrehen der Steuerscheibe verändert werden kann. Sind zum Beispiel die Arbeitsräume symmetrisch zu einem Totpunkt der axialen Bewegung der Axialkolben mit einem Steuerschlitz verbunden, so fließt über diesen Steuerschlitz weder Druckmittel zu noch Druckmittel ab. Ein Hydrotransformator, wie er bei dem Antriebssystem nach Figur 2 verwendet wird, ist ausführlich in der WO 97/31185 beschreiben, auf die hier explizit Bezug genommen wird.

Als Hydrotransformator kann auch eine Axialkolbenmaschine mit einer Trommel verwendet werden, die zwei Reihen von Axialkolben aufnehmenden Kolbenbohrungen auf unterschiedlichen Durchmessern aufweist. Eine solche Hydromaschine ist zum Beispiel in der veröffentlichten europäischen Patentanmeldung EP 0 851 121 A1 der Anmelderin beschrieben. Auch getaktet arbeitende Hydrotransformatoren, wie sie in der veröffentlichten internationalen Anmeldung WO 96/23980 oder der veröffentlichten internationalen Anmeldung WO 97/10444 der Anmelderin geoffenbart sind, können eingesetzt werden. Auf die genannten Veröffentlichungen wird hier ausdrücklich Bezug genommen.

Bei dem Ausführungsbeispiel nach Figur 3 ist die Hydropumpe 19 von einem Elektromotor 50 antreibbar, dessen Drehzahl verändert werden kann. Der Druck im Hydrospeicher 24 wird von einem Drucksensor 51 erfaßt und in ein elektrisches Signal umgewandelt, das an eine elektrische Steuereinheit 52 gegeben wird. Diese stellt in Abhängigkeit von ihrer Programmierung und in Abhängigkeit von weiteren Betriebsparametern, die ihr in nicht näher dargestellter Weise zugeführt werden, die Drehzahl des Elektromotors 50 ein oder gibt ihm die Drehzahl null vor.

Zur Regelung der Position und der Geschwindigkeit ist der Einheit aus Formschließplatte 10, Kolbenstange 14 und Kolben 13 ein Weggeber 53 zugeordnet. Der Druck im Druckraum 15 wird auch bei den Ausführungen nach den Figuren 1 und 2 durch einen Drucksensor 51 und der Druck im Druckraum 16 des Hydrozylinders bei allen gezeigten Ausführungen durch einen Drucksensor 54 erfaßt.

Bei den beiden Ausführungen nach den Figuren 1 und 3 befindet sich der Kolben 13 und mit ihm die Formschließplatte 10 in Ruhestellung, wenn die Hydromaschine 31 je nach Größe und Richtung der Leckageströme als Pumpe angetrieben von der Hydromaschine 30 oder als Motor die Hydromaschine 30 antreibend im Druckraum 16 des Hydrozylinders 11 einen Druck aufrechterhält, dessen Verhältnis zum Druck im Druckraum 15 und damit im Hydrospeicher 24 gleich dem Verhältnis der Ringfläche zur Vollfläche am Kolben 13 ist.

Zur Beschleunigung der Formschließplatte 10 arbeitet die Hydromaschine 30 als Hydromotor und wird auf ein großes Hubvolumen eingestellt. Die Hydromaschine erzeugt deshalb ein hohes Drehmoment und beschleunigt die als Hydropumpe arbeitende Hydromaschine 31, die Druckmittel aus dem Tank ansaugt und in den Druckraum 16 des Hydrozylinders fördert. Die Hydromaschine 30 entnimmt mehr Druckmittelmenge aus dem Hydrospeicher 24 als die Druckmittelmenge, die die Hydropumpe 19 in den Hydrospeicher fördert und aus dem Druckraum 15 in den Hydrospeicher verdrängt wird. Der Druck in der Druckleitung 17 und im Hydrospeicher 24 nimmt also ab. Dies wird durch Vergrößerung des Schwenkwinkels der Hydromaschine 30 ausgeglichen. Sobald die Formschließplatte 10 ihre maximale Geschwindigkeit erreicht hat, schwenkt die Hydromaschine 30 so weit zurück, daß von dem von ihr abgegebenen Drehmoment nur noch Reibungsverluste ausgeglichen werden. Die Drehzahl der Hydromaschine 31 und damit die Geschwindigkeit der Formschließplatte 10 ist dann konstant.

Zum Abbremsen der Formschließplatte 10 wird die Hydromaschine 30 zurückgeschwenkt. Die beiden Hydromaschinen 30 und 31 veringern unter Beibehaltung ihrer Drehrichtung ihre Drehzahl, so daß der Druck im Druckraum 16 des Hydrozylinders abfällt. Durch die vom Druck im Druckraum 15 an der Ringfläche des Kolbens 13 erzeugte Kraft wird die Formschließplatte abgebremst, wobei weiterhin Druckmittel aus dem Druckraum 15 in die Druckleitung 17 verdrängt wird. Es kann durchaus sein, daß vor dem endgültigen Schließen der Form der Bremsvorgang beendet ist und die Hydromaschine 30 wieder etwas ausschwenkt, bis die Formschließplatte 10 in relativ langsamer Fahrt ihre Schließstellung erreicht hat. In Schließstellung kann die Formschließplatte unabhängig vom Hydrozylinder 11 verriegelt sein, so daß die Hydromaschine 30 auf Schwenkwinkel null zurückgeschwenkt werden kann. Es ist jedoch auch denkbar, die Form durch einen hohen Druck im Druckraum 16 des Hydrozylinders 11 geschlossen zu halten, wobei der notwendige Druck oder das notwendige Druckprofil über die Zeit des Spritzvorgangs im Druckraum 16 durch die Einstellung des Schwenkwinkels der Hydromaschine 30 erhalten wird.

Während der Totzeit, in der die Form geschlossen ist, fördert die Hydropumpe 19 weiterhin Druckmittel in den Hydrospeicher 24, bis das Speicherladeventil 27 anspricht.

Zum Öffnen der Form wird der Druck im Druckraum 16 des Hydrozylinders 11 soweit erniedrigt, daß die vom im Druckraum 15 herrschenden Speicherdruck an der Ringfläche des Kolbens 13 erzeugte Kraft die Gegenkraft übersteigt (Beschleunigung) oder unter Berücksichtigung von Reibungskräften gleich der Gegenkraft ist (konstante Geschwindigkeit). Dazu wird der Schwenkwinkel der Hydromaschine 30 je nach gewünschter Beschleunigung und Geschwindigkeit der Formschließplatte eingestellt. Die Hydromaschine 31 arbeitet nun als Hydromotor, über den das aus dem Druckraum 16 verdrängte Druckmittel zum Tank 25 abfließt. Die Hydromaschine 30 arbeitet als von dem Hydromotor 31 angetriebene Hydropumpe, die Druckmittel aus dem Tank 25 in. die Druckleitung 17 fördert. Die Drehrichtung der Welle 23 der beiden Hydromaschinen 30 und 31 ist zur Drehrichtung beim Schließen der Form entgegengesetzt. Zum Abbremsen der Formschließplatte vor Erreichen ihrer Offenstellung wird der Schwenkwinkel der Hydromaschine 30 vergrößert. In Offenstellung kann die Formschließplatte durch einen Anschlag gehalten werden, so daß die Hydromaschine 30 auf null zurückgeschwenkt werden kann. Es ist jedoch auch möglich, wie weiter oben schon beschreiben, den Schwenkwinkel der Hydromaschine 30 und damit den Druck im Druckraum 16 auf einen solchen Wert einzustellen, daß am Kolben 13 Kräftegleichgewicht besteht.

Bei der Ausführung nach Figur 2 wird der dort verwendete Hydrotransformator vom Prinzip her genauso gesteuert wie bei den Ausführungen nach den Figuren 1 und 3. Zur Steuerung wird allerdings nicht die Schrägscheibe verschwenkt, sondern es wird die Steuerscheibe relativ zur Schrägscheibe verdreht.

Bei der Ausführung nach Figur 3 treibt der Elektromotor 50 während der Schließbewegung der Formschließplatte 10 die Hydropumpe 19 mit einer Drehzahl an, bei der ein hoher Wirkungsgrad besteht. Der Druck im Hydrospeicher 24 erniedrigt sich. In der der Schließbewegung folgenden Totzeit wird die Hydropumpe 19 weiterhin vom Elektromotor 50 angetrieben, bis der Druck im Hydrospeicher 24 einen vorgegebenen Wert erreicht. Sobald der Drucksensor 51 diesen Druck meldet, schaltet die Steuereinheit 52 den Elektromotor 50 aus. Durch das Rückschlagventil 26 wird verhindert, daß während der Ausschaltzeit des Elektromotors 50 Druckmittel aus dem Hydrospeicher 24 über die Hydropumpe 19 zum Tank 25 entweicht. Wenn der Spritzgießvorgang beendet ist und das Werkstück bis zur Formstabilität abgekühlt ist, wird zur Beschleunigung der Formschließplatte 10 in Öffnungsrichtung sofort viel Druckmittel verbraucht, das aus dem Hydrospeicher 24 über die Hydromaschine 30 zum Tank 25 abfließt. Der Elektromotor 50 wird eingeschaltet, damit durch die Pumpe 19 zumindest ein Teil des abfließenden Druckmittels ersetzt wird. Je nach der Zeitdauer, die sich die Formschließplatte bis zu Beginn der nächsten Schließbewegung in der Offenstellung befindet, wird auch in der Offenstellung der Formschließplatte der Elektromotor 50 für eine bestimmte Zeit ausgeschaltet.

## Patentansprüche

1. Hydrostatisches Antriebssystem für eine Spritzgießmaschine, die eine bewegliche Formschließplatte (10) aufweist, mit einem Hydrozylinder (11), der auf der einen Seite eines Kolbens (13) einen kolbenstangenseitigen, ringförmigen, ersten Druckraum (15) und auf der anderen Seite des Kolbens (13) einen kolbenstangenabseitigen, zweiten Druckraum (16) aufweist und von dem die Formschließplatte (10) durch Zufuhr von Druckmittel in den zweiten Druckraum (16) in Richtung Schließstellung und durch Zufuhr von Druckmittel in den ersten Druckraum (15) in Richtung Offenstellung verfahrbar ist, und mit einer Hydropumpe (19),
**dadurch gekennzeichnet,**
**daß** von der Hydropumpe (19) Druckmittel in ein einen Hydrospeicher (24) aufweisendes Drucknetz (17, 24) förderbar ist, und der erste Druckraum (15) des Hydrozylinders (11) an das Drucknetz (17, 24) angeschlossen ist
und **daß** die Steuerung des Hydrozylinders (11) über einen Hydrotransformator (18) erfolgt, der mit seinem primärseitigen Druckanschluß (32, 40) am Drucknetz (17, 24) liegt und über dessen sekundärseitigen Druckanschluß (34, 42) Druckmittel dem zweiten Druckraum (16) des Hydrozylinders (11) zuführbar oder aus dem zweiten Druckraum (16) abführbar ist.

2. Hydrostatisches Antriebssystem nach Anspruch 1, **dadurch gekennzeichnet, daß** eine sekundärseitige Hydromaschine (31) des Hydrotransformators (18) konstantes Hubvolumen hat.

3. Hydrostatisches Antriebssystem nach Anspruch 1, **dadurch gekennzeichnet, daß** der Hydrotransformator zwei in ihrem Hubvolumen gegensinnig verstellbare Hydromaschinen umfaßt.

4. Hydrostatisches Antriebssystem nach Anspruch 1, **dadurch gekennzeichnet, daß** als Hydrotransformator ein getaktet arbeitendes Gerät verwendet ist.

5. Hydrostatisches Antriebssystem nach einem vorhergehenden Anspruch, **dadurch gekennzeichnet, daß** zwischen dem Hydrospeicher (24) und der Hydropumpe (19) ein Ventil (26) angeordnet ist, durch das ein Druckmittelfluß vom Hydrospeicher (24) zur Hydropumpe (19) verhinderbar ist.

6. Hydrostatisches Antriebssystem nach Anspruch 5, **dadurch gekennzeichnet, daß** das Ventil (26) ein vom Hydrospeicher (24) zur Hydropumpe (19) hin sperrendes Rückschlagventil ist.

7. Hydrostatisches Antriebssystem nach einem vorhergehenden Anspruch, **dadurch gekennzeichnet, daß** die Hydropumpe (19) von einem Elektromotor (50) antreibbar ist und daß über eine elektrische Steuereinheit (52) die Drehzahl des Elektromotors (50) veränderbar ist.

## Claims

1. A hydrostatic drive system for an injection moulding machine with a movable mould clamping plate (10), having a hydraulic cylinder (11) with on the one side of a piston (13) a piston-rod-side, annular, first pressure chamber (15) and on the other side of the piston (13) a non-piston-rod-side, second pressure chamber (16), by which hydraulic cylinder (11) the mould clamping plate (10) can be moved in the closing direction through the feeding of pressure fluid into the second pressure chamber (16) and in the opening direction through the feeding of pressure fluid into the first pressure chamber (15), and having a hydraulic pump (19),
**characterized in that**
the pressure fluid can be delivered by the hydraulic pump (19) into a pressure network (17, 24) having a hydraulic accumulator (24), the first pressure chamber (15) of the hydraulic cylinder (11) being connected to the pressure network (17, 24),
and that the control of the hydraulic cylinder (11) is done via a hydraulic transformer (18) which with its primary-side pressure port (32, 40) is connected to the pressure network (17, 24) and via the secondary-side pressure port (34, 42) of said transformer pressure fluid can be fed into the second pressure chamber (16) of the hydraulic cylinder (11) or withdrawn from the second pressure chamber (16).

2. A hydrostatic drive system according to Claim 1, **characterized in that** a hydraulic unit (31) on the secondary side of the hydraulic transformer (18) has a constant stroke volume.

3. A hydrostatic drive system according to Claim 1, **characterized in that** the hydraulic transformer comprises two hydraulic units the stroke volumes of which can be adjusted in opposing senses

4. A hydrostatic drive system according to Claim 1, **characterized in that** a device working in clocked mode is used as the hydraulic transformer.

5. A hydrostatic drive system according to any of the preceding claims, **characterized in that** between the hydraulic accumulator (24) and the hydraulic pump (19) is arranged a valve (26) by means of which a flow of pressure fluid from the hydraulic accumulator (24) to the hydraulic pump (19) can be prevented.

6. A hydrostatic drive system according to Claim 5, **characterized in that** the valve (26) is a non-return valve closing in the direction from the hydraulic accumulator (24) to the hydraulic pump (19).

7. A hydrostatic drive system according to any of the preceding claims, **characterized in that** the hydraulic pump (19) can be driven by an electric motor (50) and that the speed of the electric motor (50) can be adjusted via an electric control unit (52).

## Revendications

1. Un système d'actionnement hydrostatique pour une presse d'injection, qui présente une plaque (10) de fermeture de moule mobile, dotée d'un vérin (11) hydraulique, lequel d'un côté d'un piston (13) présente une première chambre (15) de pression annulaire, côté tige, et de l'autre côté du piston (13) présente une seconde chambre (16) de pression, du côté opposé à la tige, et lequel peut faire bouger la plaque (10) de fermeture de moule dans le sens d'une position fermée, par alimentation en fluide de pression de la seconde chambre (16) de pression, et dans le sens d'une position ouverte, par alimentation en fluide de pression de la première chambre (15) de pression, et dotée d'une pompe (19) hydraulique, **caractérisé en ce**
**que** la pompe (19) hydraulique permet de débiter du fluide de pression dans un réseau (17, 24) de pression présentant un accumulateur (24) hydraulique et la première chambre (15) de pression du vérin (11) hydraulique est raccordée au réseau (17, 24) de pression
et **que** la commande du vérin (11) hydraulique a lieu à l'aide d'un transformateur (18) hydraulique, qui est disposé au niveau du réseau (17, 24) de pression de par son raccord (32, 40) de pression côté primaire et à l'aide du raccord (34, 42) de pression côté secondaire duquel du fluide de pression peut être soit dévié vers la seconde chambre (16) de pression, soit évacué de la seconde chambre (16) de pression.

2. Un système d'actionnement hydrostatique conforme à la revendication n° 1, **caractérisé en ce que** une machine (31) hydraulique côté secondaire du transformateur (18) hydraulique possède une cylindrée constante.

3. Un système d'actionnement hydrostatique conforme à la revendication n° 1, **caractérisé en ce que** le transformateur hydraulique comporte deux machines hydrauliques, dont les cylindrées peuvent être régulées dans des sens opposés.

4. Un système d'actionnement hydrostatique conforme à la revendication n° 1, **caractérisé en ce que** un appareil travaillant de façon périodique est utilisé comme transformateur hydraulique.

5. Un système d'actionnement hydrostatique conforme à une revendication précédente, **caractérisé en ce que** entre l'accumulateur (24) hydraulique et la pompe (19) hydraulique est disposée une valve (26), qui permet d'empêcher un flux de fluide de pression de l'accumulateur (24) hydraulique vers la pompe (19).

6. Un système d'actionnement hydrostatique conforme à la revendication n° 5, **caractérisé en ce que** la valve (26) est un clapet anti-retour fermant dans le sens allant de l'accumulateur (24) hydraulique vers la pompe (19).

7. Un système d'actionnement hydrostatique conforme à une revendication précédente, **caractérisé en ce que** la pompe (19) hydraulique peut être entraînée par un moteur (50) électrique et que la vitesse de rotation du moteur électrique peut être modifiée à l'aide d'une unité (52) de commande électrique.
